# EUROPÄISCHE PATENTSCHRIFT

(11) **EP 3 972 113 B1**
(45) Veröffentlichungstag und Bekanntmachung des Hinweises auf die Patenterteilung: **25.12.2024**
(21) Anmeldenummer: 20196822.9
(22) Anmeldetag: 18.09.2020
(51) Int. Cl.: H02M 7/487, H02M 7/483, H02M 1/00

(54) **STROMRICHTEREINRICHTUNG MIT EINEM EINE ANPC-TOPOLOGIE AUFWEISENDEN STROMRICHTER UND MIT EINER STEUEREINRICHTUNG**
CONVERTER DEVICE WITH A CONVERTER COMPRISING ANPC TOPOLOGY AND A CONTROL DEVICE
DISPOSITIF CONVERTISSEUR STATIQUE DOTÉ D'UN CONVERTISSEUR STATIQUE COMPORTANT UNE TOPOLOGIE ANPC ET DOTÉ D'UN DISPOSITIF DE COMMANDE

(43) Veröffentlichungstag der Anmeldung: 23.03.2022
(73) Patentinhaber: SEMIKRON Elektronik GmbH & Co. KG, 90431 Nürnberg (DE)
(72) Erfinder: Ammon, Jörg, 91052 Erlangen (DE); Kobolla, Harald, 90556 Seukendorf (DE); Beckedahl, Peter, 90522 Oberasbach (DE)

(56) Entgegenhaltungen:
- DE-A1- 102018 219 270
- ZHANG DI ET AL: "Three-Level Two-Stage Decoupled Active NPC Converter With Si IGBT and SiC MOSFET", IEEE TRANSACTIONS ON INDUSTRY APPLICATIONS, IEEE SERVICE CENTER, PISCATAWAY, NJ, US, vol. 54, no. 6, 1 November 2018 (2018-11-01), pages 6169 - 6178, XP011691322, ISSN: 0093-9994, [retrieved on 20181010], DOI: 10.1109/TIA.2018.2851561
- SRIDHAR R PULIKANTI ET AL: "Voltage Balancing Control of Three-Level Active NPC Converter Using SHE-PWM", IEEE TRANSACTIONS ON POWER DELIVERY, IEEE SERVICE CENTER, NEW YORK, NY, US, vol. 26, no. 1, 1 January 2011 (2011-01-01), pages 258 - 267, XP011340585, ISSN: 0885-8977, DOI: 10.1109/TPWRD.2010.2063718

## Beschreibung

Die Erfindung betrifft eine Stromrichtereinrichtung mit einem Stromrichter, der einen ersten, zweiten, dritten, vierten, fünften und sechsten Leistungshalbleiterschalter, die jeweilig einen ersten und einen zweiten Laststromanschluss aufweisen, aufweist und mit einer Steuereinrichtung, die zur Ansteuerung dieser Leistungshalbleiterschalter ausgebildet ist. Der zweite Laststromanschluss des ersten Leistungshalbleiterschalters ist mit dem ersten Laststromanschluss des zweiten Leistungshalbleiterschalters und mit dem ersten Laststromanschluss des fünften Leistungshalbleiterschalters elektrisch leitend verbunden. Der zweite Laststromanschluss des zweiten Leistungshalbleiterschalters ist mit dem ersten Laststromanschluss des dritten Leistungshalbleiterschalters elektrisch leitend verbunden. Der zweite Laststromanschluss des dritten Leistungshalbleiterschalters ist mit dem ersten Laststromanschluss des vierten Leistungshalbleiterschalters und mit dem ersten Laststromanschluss des sechsten Leistungshalbleiterschalters elektrisch leitend verbunden. Der zweite Laststromanschluss des fünften Leistungshalbleiterschalters ist mit dem zweiten Laststromanschluss des sechsten Leistungshalbleiterschalters elektrisch leitend verbunden. Der Stromrichter weist eine ANPC-Topologie (Active Neutral Point Clamped Topologie) auf.

Eine solche Stromrichtereinrichtung ist aus der JP H05-211776 A und der US 2019/0013743 A1 bekannt. Nachteilig dabei ist, dass in dem Schaltzeitpunkt, zudem der zweite und vierte Leistungshalbleiterschalter zu dem ersten und dritten Leistungshalbleiterschalter konträr umgeschaltet werden, auch annähernd gleichzeitig der fünfte und sechste Leistungshalbleiterschalter konträr umgeschaltet werden (siehe FIG 2 und FIG 3 der JP H05-211776 A und FIG 1 und FIG 2 der US 2019/0013743 A1). Bei einer realen technischen Realisierung der Ansteuerung des fünften und sechsten Leistungshalbleiterschalters schalten diese, z.B. infolge unterschiedlicher Schaltzeiten und unterschiedlicher Längen der Ansteuerleitungen zu den Leistungshalbleiterschaltern, unkontrolliert entweder kurz vor dem Schaltzeitpunkt, zu dem der zweite und vierte Leistungshalbleiterschalter zu dem ersten und dritten Leistungshalbleiterschalter konträr umgeschaltet werden oder kurz nach diesem, was technisch unerwünscht ist. Aus der US 2019/0013743 A1 ist es bekannt, zu dem Schaltzeitpunkt, zu dem der zweite und vierte Leistungshalbleiterschalter zu dem ersten und dritten Leistungshalbleiterschalter konträr umgeschaltet werden, den fünften Leistungshalbleiterschalter sehr geringfügig vor diesem Schaltzeitpunkt auszuschalten, obwohl der Schnittpunkt des dreieckförmigen Modulationssignals mit dem sinusförmigen Sollsignal eigentlich (siehe FIG 2 der US 2019/0013743 A1) zu diesem Schaltzeitpunkt ein gleichzeitiges Ausschalten des fünften Leistungshalbleiterschalters vorgibt. Nachteilig bei der in der US 2019/0013743 A1 vorgeschlagen Ansteuerung der Leistungshalbleiterschalter ist, dass diese wenig flexibel ist, da der betreffende Schaltzeitpunkt immer mit dem Nulldurchgang des sinusförmigen Sollsignals übereinstimmt.

Aus der Veröffentlichung "Three-Level Two-Stage Decoupled Active NPC Converter With Si IGBT and SIC MOSFET", ZHANG DI ET AL, IEEE TRANSACTIONS ON INDUSTRY APPLICATIONS, IEEE, Bd. 54, Nr. 6, 1. November 2018, Seiten 6169-6178, ist ein eine ANPC-Topologie aufweisender Stromrichter, bei dem die mit einer hohen Frequenz ein- und ausschaltenden Leistungshalbleiterschalter als MOSFETS und die mit einer niedrigen Frequenz ein- und ausschaltenden Leistungshalbleiterschalter als IGBTs ausgebildet sind, bekannt.

Aus der DE 10 2018 219 270 A1 ist ein Wechselrichter mit einem ersten Eingangsanschlusspol, an dem im Betrieb des Wechselrichters ein positives Zwischenkreispotential angelegt ist, mit einen zweiten Eingangsanschlusspol, an dem im Betrieb des Wechselrichters ein Mittenpotential angelegt ist, mit einem dritten Eingangsanschlusspol, an den im Betrieb des Wechselrichters ein negatives Zwischenkreispotential angelegt ist, mit einen Ausgangsanschlusspol, an dem im Betrieb des Wechselrichters ein Ausgangspotential ausgegeben wird, mit einer Drossel und mit mehreren Schaltmittels bekannt.

Aus der Veröffentlichung "Voltage Balancing Control of Three-Level Active NPC converter using SHE-PWM", SRIDHAR R PULIKANTI ET AL, IEEE TRANSACTIONS ON POWER DELIVERY, Bd. 26, Nr. 1, 1. Januar 2011, Seiten 258-267, ist ein eine ANPC-Topologie aufweisender Stromrichter bei dem eine Pulsweitenmodulation zur Ansteuerung der Leistungshalbleiterschalter verwendet wird, bei der bestimmte harmonische Stromschwingungen unterdrückt werden.

Es ist Aufgabe der Erfindung eine Stromrichtereinrichtung zu schaffen, die eine flexiblere Ansteuerung der Leistungshalbleiterschalter ermöglicht.

Diese Aufgabe wird gelöst durch eine Stromrichtereinrichtung mit einem Stromrichter, der einen ersten, zweiten, dritten, vierten, fünften und sechsten Leistungshalbleiterschalter, die jeweilig einen ersten und einen zweiten Laststromanschluss aufweisen, aufweist und mit einer Steuereinrichtung, die zur Ansteuerung dieser Leistungshalbleiterschalter ausgebildet ist, wobei der zweite Laststromanschluss des ersten Leistungshalbleiterschalters mit dem ersten Laststromanschluss des zweiten Leistungshalbleiterschalters und mit dem ersten Laststromanschluss des fünften Leistungshalbleiterschalters elektrisch leitend verbunden ist, wobei der zweite Laststromanschluss des zweiten Leistungshalbleiterschalters mit dem ersten Laststromanschluss des dritten Leistungshalbleiterschalters elektrisch leitend verbunden ist, wobei der zweite Laststromanschluss des dritten Leistungshalbleiterschalters mit dem ersten Laststromanschluss des vierten Leistungshalbleiterschalters und mit dem ersten Laststromanschluss des sechsten Leistungshalbleiterschalters elektrisch leitend verbunden ist, wobei der zweite Laststromanschluss des fünften Leistungshalbleiterschalters mit dem zweiten Laststromanschluss des sechsten Leistungshalbleiterschalters elektrisch leitend verbunden ist, wobei die Steuereinrichtung dazu ausgebildet ist, die Leistungshalbleiterschalter derart anzusteuern, dass
- der erste und dritte Leistungshalbleiterschalter gleichzeitig eingeschaltet und gleichzeitig ausgeschaltet werden, und
- der zweite und vierte Leistungshalbleiterschalter gleichzeitig eingeschaltet und gleichzeitig ausgeschaltet werden, wobei der zweite und vierte
Leistungshalbleiterschalter zu dem ersten und dritten Leistungshalbleiterschalter konträr eingeschaltet und ausgeschaltet werden, wobei der erste und dritte Leistungshalbleiterschalter zu Ausschalthauptzeitpunkten ausgeschaltet werden, und
- der erste und dritte Leistungshalbleiterschalter mit einer ersten Frequenz ein- und ausgeschalten werden, und
   der fünfte und sechste Leistungshalbleiterschalter zueinander konträr eingeschaltet und ausgeschaltet werden, und
- in einem jeweiligen Zeitraum, in dem der erste und dritte Leistungshalbleiterschalter oder der zweite und vierte Leistungshalbleiterschalter gleichzeitig eingeschaltet sind, der fünfte und sechste Leistungshalbleiterschalter mehrfach eingeschaltet und ausgeschaltet werden, dadurch gekennzeichnet,
dass die Steuereinrichtung dazu ausgebildet ist, die Leistungshalbleiterschalter derart anzusteuern, dass der fünfte Leistungshalbleiterschalter vor dem jeweiligen Ausschalthauptzeitpunkt ausgeschaltet wird und erst nach dem jeweiligen Ausschalthauptzeitpunkt wieder eingeschaltet wird oder der fünfte

Leistungshalbleiterschalter vor dem jeweiligen Ausschalthauptzeitpunkt eingeschaltet wird und erst nach dem jeweiligen Ausschalthauptzeitpunkt wieder ausgeschaltet wird, wobei die Steuereinrichtung dazu ausgebildet ist, anhand eines eine zweite Frequenz aufweisenden sinusförmigen Sollsignals den ersten, zweiten, dritten und vierten Leistungshalbleiterschalter ein- und auszuschalten und anhand des sinusförmigen Sollsignals und eines eine dritte Frequenz aufweisenden Modulationssignals (M) den fünften und sechsten Leistungshalbleiterschalter pulsweitenmoduliert ein- und auszuschalten,
wobei die zweite Frequenz mit der ersten Frequenz übereinstimmt,
wobei die Steuereinrichtung dazu ausgebildet ist, dass der erste und dritte Leistungshalbleiterschalter eingeschaltet sind, wenn das Sollsignal einen positiven Wert aufweist, und ausgeschaltet sind, wenn das Sollsignal einen negativen Wert aufweist, wobei, wenn das Modulationssignal einen höheren Wert aufweist als das Sollsignal, der fünfte Leistungshalbleiterschalter ausgeschaltet ist und, wenn das Modulationssignal einen niedrigeren Wert aufweist als das Sollsignal, der fünfte Leistungshalbleiterschalter eingeschaltet ist, wobei
die dritte Frequenz ein ganzzahliges Vielfaches der zweiten Frequenz ist, wobei das Modulationssignal gegenüber dem Sollsignal phasenverschoben ist,
   oder
die dritte Frequenz höher ist als die zweite Frequenz, wobei die dritte Frequenz kein ganzzahliges Vielfaches der zweiten Frequenz ist.

Die Steuereinrichtung ist dazu ausgebildet ist, anhand eines eine zweite Frequenz aufweisenden sinusförmigen Sollsignals den ersten, zweiten, dritten und vierten Leistungshalbleiterschalter ein- und auszuschalten und anhand des sinusförmigen Sollsignals und eines eine dritte Frequenz aufweisenden Modulationssignals den fünften und sechsten Leistungshalbleiterschalter pulsweitenmoduliert ein- und auszuschalten, wobei die Steuereinrichtung dazu ausgebildet ist, dass der erste und dritte Leistungshalbleiterschalter eingeschaltet sind, wenn das Sollsignal einen positiven Wert aufweist, und ausgeschaltet sind, wenn das Sollsignal einen negativen Wert aufweist, wobei, wenn das Modulationssignal einen höheren Wert aufweist als das Sollsignal, der fünfte Leistungshalbleiterschalter ausgeschaltet ist und, wenn das Modulationssignal einen niedrigeren Wert aufweist als das Sollsignal, der fünfte Leistungshalbleiterschalter eingeschaltet ist. Anhand des Sollsignals und des Modulationssignals werden auf einfache Art und Weise die Ansteuersignale zum Ein- und Ausschalten der Leistungshalbleiterschalter erzeugt.

Wenn die dritte Frequenz ein ganzzahliges Vielfaches der zweiten Frequenz ist, wobei das Modulationssignal gegenüber dem Sollsignal phasenverschoben ist, wird sehr zuverlässig bewirkt, dass der fünfte Leistungshalbleiterschalter vor dem jeweiligen Ausschalthauptzeitpunkt ausgeschaltet wird und erst nach dem jeweiligen Ausschalthauptzeitpunkt wieder eingeschaltet wird oder der fünfte Leistungshalbleiterschalter vor dem jeweiligen Ausschalthauptzeitpunkt eingeschaltet wird und erst nach dem jeweiligen Ausschalthauptzeitpunkt wieder ausgeschaltet wird.

Wenn die dritte Frequenz höher ist als die zweite Frequenz, wobei die dritte Frequenz kein ganzzahliges Vielfaches der zweiten Frequenz ist, wird sehr zuverlässig bewirkt, dass der fünfte Leistungshalbleiterschalter vor dem jeweiligen Ausschalthauptzeitpunkt ausgeschaltet wird und erst nach dem jeweiligen Ausschalthauptzeitpunkt wieder eingeschaltet wird oder der fünfte Leistungshalbleiterschalter vor dem jeweiligen Ausschalthauptzeitpunkt eingeschaltet wird und erst nach dem jeweiligen Ausschalthauptzeitpunkt wieder ausgeschaltet wird.

Es erweist sich als vorteilhaft, wenn das Halbleitermaterial, aus denen der erste, zweite, dritte und vierte Leistungshalbleiterschalter ausgebildet sind, aus Silizium ausgebildet ist und das Halbleitermaterial, aus denen der fünfte und sechste Leistungshalbleiterschalter ausgebildet sind, aus Siliziumkarbid oder Galliumnitrid ausgebildet ist. Hierdurch werden die Schaltverluste reduziert, da auf Basis von Siliziumkarbid oder Galliumnitrid ausgebildete Leistungshalbleiterschalter geringere Schaltverluste aufweisen als auf Basis von Silizium ausgebildete Leistungshalbleiterschalter.

Ferner erweist es sich als vorteilhaft, wenn der fünfte und sechste Leistungshalbleiterschalter als MOSFETS ausgebildet sind. Hierdurch werden die Schaltverluste des Stromrichters reduziert.

Weiterhin erweist es sich als vorteilhaft, wenn der Stromrichter einen Kondensator aufweist, wobei ein erster Anschluss des Kondensators mit dem ersten Laststromanschluss des fünften Leistungshalbleiterschalters und ein zweiter Anschluss des Kondensators mit dem ersten Laststromanschluss des sechsten Leistungshalbleiterschalters elektrisch leitend verbunden ist. Hierdurch werden im Betrieb des Stromrichters auftretende elektrische Spannungsschwingungen reduziert.

Es sei angemerkt, dass im Sinne der Erfindung unter dem Begriff "gleichzeitig" keine exakte mathematische Gleichzeitig gemeint ist, sondern der Begriff "gleichzeitig" in einem technischen Sinne zu verstehen ist, so dass z.B. aufgrund von einzuhaltenden TOT-Zeiten, um Brückenkurzschlüsse zu vermeiden, unterschiedliche Schaltverszögerungszeiten der Leistungshalbleiterschalter und unterschiedliche Ansteuersignalverzögerungen, auftretende Abweichungen von der mathematischen Gleichzeitigkeit vernachlässigt werden.

Ausführungsbeispiele der Erfindung werden nachfolgend unter Bezugnahme auf die unten stehenden Figuren erläutert. Dabei zeigen:
- FIG 1: eine erfindungsgemäße Stromrichtereinrichtung,
- FIG 2: bei einer techniküblichen Stromrichtereinrichtung auftretende Signale,
- FIG 3 und FIG 4: bei einer Ausbildung einer erfindungsgemäßen Stromrichtereinrichtung auftretende Signale und
- FIG 5 und FIG 6: bei einer weiteren Ausbildung einer erfindungsgemäßen Stromrichtereinrichtung auftretende Signale.

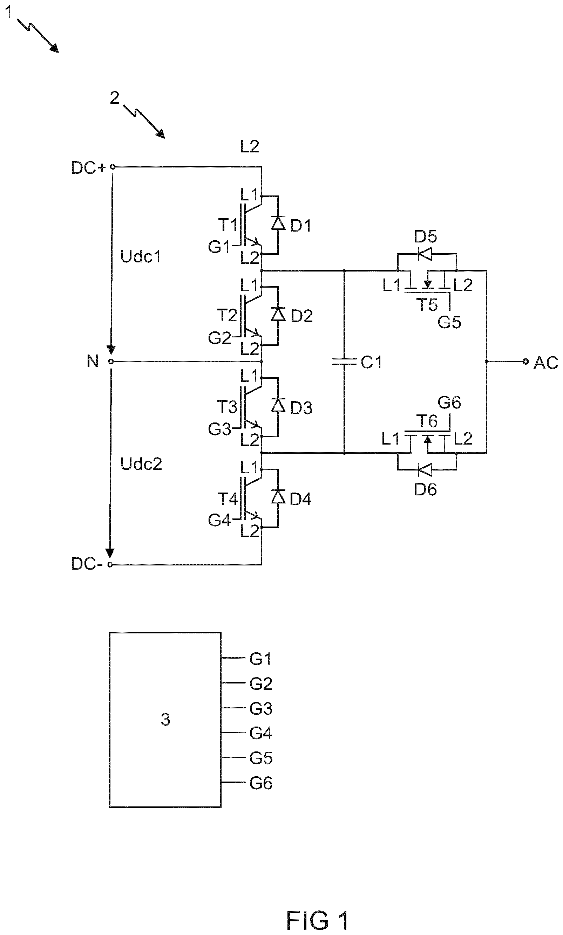

In FIG 1 ist eine erfindungsgemäße Stromrichtereinrichtung 1 mit einem Stromrichter 2 und mit einer Steuereinrichtung 3 dargestellt. Der Stromrichter 2 weist einen ersten, zweiten, dritten, vierten, fünften und sechsten Leistungshalbleiterschalter T1, T2, T3, T4, T5 und T6 auf, die jeweilig einen ersten und einen zweiten Laststromanschluss L1 und L2 aufweisen. Der zweite Laststromanschluss L2 des ersten Leistungshalbleiterschalters T1 ist mit dem ersten Laststromanschluss L1 des zweiten Leistungshalbleiterschalters T2 und mit dem ersten Laststromanschluss L1 des fünften Leistungshalbleiterschalters T5 elektrisch leitend verbunden. Der zweite Laststromanschluss L2 des zweiten Leistungshalbleiterschalters T2 ist mit dem ersten Laststromanschluss L1 des dritten Leistungshalbleiterschalters T3 elektrisch leitend verbunden. Der zweite Laststromanschluss L2 des dritten Leistungshalbleiterschalters T3 ist mit dem ersten Laststromanschluss L1 des vierten Leistungshalbleiterschalters T4 und mit dem ersten Laststromanschluss L1 des sechsten

Leistungshalbleiterschalters T6 elektrisch leitend verbunden. Der zweite Laststromanschluss L2 des fünften Leistungshalbleiterschalters T5 ist mit dem zweiten Laststromanschluss L2 des sechsten Leistungshalbleiterschalters T6 elektrisch leitend verbunden.

Der Stromrichter 2 weist einen Positivpotentialanschluss DC+, der mit dem ersten Laststromanschluss L1 des ersten Leistungshalbleiterschalters T1 elektrisch leitend verbunden ist, einen Negativpotentialanschluss DC-, der mit den zweiten Laststromanschluss L2 des vierten Leistungshalbleiterschalters T4 elektrisch leitend verbunden ist, einen Neutralpotentialanschluss N, der mit dem zweiten Laststromanschluss L2 des zweiten Leistungshalbleiterschalters T2 elektrisch leitend verbunden ist und einen Wechselpotentialanschluss AC, der mit dem zweiten Laststromanschluss L2 des fünften Leistungshalbleiterschalters T5 elektrisch leitend verbunden ist, auf. Der Stromrichter 2 weist solchermaßen eine ANPC-Topologie auf. Es ist vorgesehen, dass zwischen dem Positivpotentialanschluss DC+ bzw. dem ersten Laststromanschluss L1 des ersten Leistungshalbleiterschalters T1 und dem Neutralpotentialanschluss N bzw. dem zweiten Laststromanschluss L2 des zweiten Leistungshalbleiterschalters T2 eine erste Gleichspannung Udc1 anliegt und das zwischen dem Neutralpotentialanschluss N bzw. dem zweiten Laststromanschluss L2 des zweiten Leistungshalbleiterschalters T2 und dem zweiten Laststromanschluss L2 des vierten Leistungshalbleiterschalters T4 eine zweite Gleichspannung Udc2 anliegt

Dem jeweiligen Leistungshalbleiterschalter T1, T2, T3, T4, T5 bzw. T6 ist vorzugsweise jeweilig eine Diode D1, D2, D3, D4, D5 bzw. D6 elektrisch antiparallel geschaltet, wobei die Diode D1, D2, D3, D4, D5 bzw. D6, insbesondere wenn der betreffende Leistungshalbleiterschalter als MOSFET ausgebildet ist, auch integraler Bestandteil des jeweiligen Leistungshalbleiterschalters T1, T2, T3, T4, T5 bzw. T6 sein kann.

Die elektrische Funktionsweise des Stromrichter 2 ist allgemein bekannter Stand der Technik. Durch entsprechendes Ein- und Ausschalten der Leistungshalbleiterschalter T1, T2, T3, T4, T5 und T6 kann der Wechselpotentialanschluss AC mit dem ersten oder zweiten Gleichspannungsanschluss DC+ oder DC- oder mit dem Neutralpotentialanschluss N elektrisch leitend verbunden werden.

Das Halbleitermaterial aus denen der erste, zweite, dritte und vierte Leistungshalbleiterschalter T1, T2, T3, bzw. T4 ausgebildet sind, ist vorzugsweise aus Silizium ausgebildet und das Halbleitermaterial aus denen der fünfte und sechste Leistungshalbleiterschalter T5 und T6 ausgebildet sind, ist vorzugsweise aus Siliziumkarbid oder Galliumnitrid ausgebildet.

Der fünfte und sechste Leistungshalbleiterschalter T5 und T6 sind vorzugsweise als MOSFETS ausgebildet. Der erste, zweite, dritte und vierte Leistungshalbleiterschalter T1, T2, T3 und T4 können z.B. als IGBTs ausgebildet sein. Im Rahmen des Ausführungsbeispiels sind die ersten Laststromanschlüsse L1 des ersten, zweiten, dritten und vierten Leistungshalbleiterschalters T1, T2, T3 und T4 als Kollektoranschlüsse und die zweiten Laststromanschlüsse L2 des ersten, zweiten, dritten und vierten Leistungshalbleiterschalters T1, T2, T3 und T4 als Emitteranschlüsse ausgebildet. Weiterhin sind im Rahmen des Ausführungsbeispiels die ersten Laststromanschlüsse L1 des fünften und sechsten Leistungshalbleiterschalters T5 und T6 als Drainanschlüsse und die zweiten Laststromanschlüsse L2 des fünften und sechsten Leistungshalbleiterschalters T5 und T6 als Sourceanschlüsse ausgebildet.

Der Stromrichter 2 weist vorzugsweise einen Kondensator C1 auf. Ein erster Anschluss des Kondensators C1 ist mit dem ersten Laststromanschluss L1 des fünften Leistungshalbleiterschalters T5 und ein zweiter Anschluss des Kondensators C1 ist mit dem ersten Laststromanschluss L1 des sechsten Leistungshalbleiterschalters T6 elektrisch leitend verbunden. Der Kondensator C1 dient als Snubberkondensator.

Die Steuereinrichtung 3 ist zur Ansteuerung der Leistungshalbleiterschalter T1, T2, T3, T4, T5 und T6 ausgebildet. Die Steuereinrichtung 3 weist hierzu Ausgänge auf, die mit Steueranschlüssen G1, G2, G3, G4, G5 und G6 der Leistungshalbleiterschalter T1, T2, T3, T4, T5 und T6, die hier als Gateanschlüsse ausgebildet sind, elektrisch leitend verbunden sind. Die Steuereinrichtung 3 erzeugt Ansteuersignale zur Ansteuerung der Leistungshalbleiterschalter T1, T2, T3, T4, T5 und T6, genauer ausgedrückt zum Ein- und Ausschalten der Leistungshalbleiterschalter T1, T2, T3, T4, T5 und T6.

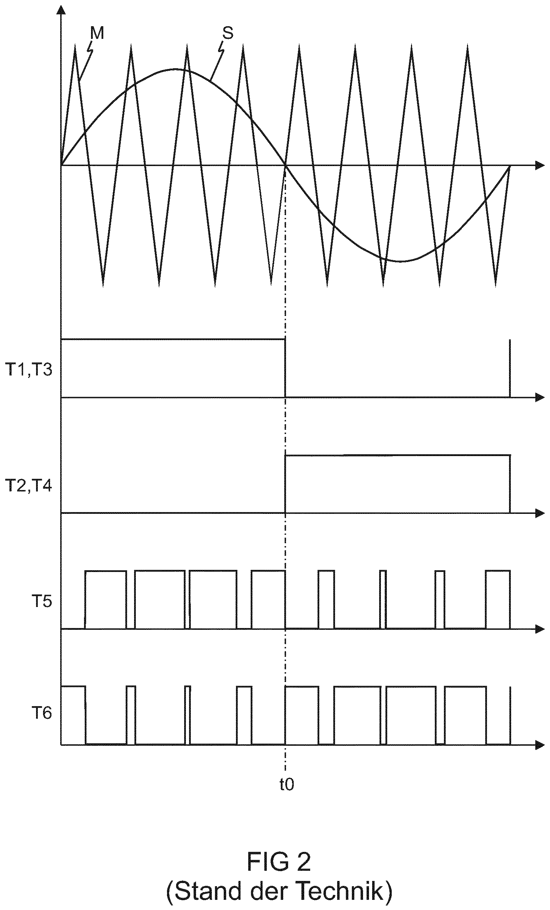

In FIG 2 sind die bei einer techniküblichen Stromrichtereinrichtung, die einen eine ANPC-Topologie aufweisenden Stromrichter (siehe FIG 1) und eine technikübliche Steuereinrichtung aufweist, dargestellt. Die in FIG 2 dargestellten unteren vier Schaltsignale zeigen das Ein- und Ausschalten der Leistungshalbleiterschalter T1, T2, T3, T4, T5 und T6, wobei wenn der betreffende Leistungshalbleiterschalter eingeschaltet ist, das betreffende Schaltsignal einen HIGH-Pegel aufweist und wenn der betreffende Leistungshalbleiterschalter ausgeschaltet ist, das betreffende Schaltsignal einen LOW-Pegel aufweist. Anhand der Schaltsignale werden von der Steuereinrichtung die Ansteuersignale für die Leistungshalbleiterschalter T1, T2, T3, T4, T5 und T6 erzeugt. Die technikübliche Steuereinrichtung ist dazu ausgebildet die Leistungshalbleiterschalter T1,T2,T3,T4,T5 und T6 derart anzusteuern, dass
- der erste und dritte Leistungshalbleiterschalter T1 und T3 gleichzeitig eingeschaltet und gleichzeitig ausgeschaltet werden, und
- der zweite und vierte Leistungshalbleiterschalter T2 und T4 gleichzeitig eingeschaltet und gleichzeitig ausgeschaltet werden, wobei der zweite und vierte Leistungshalbleiterschalter T2 und T4 zu dem ersten und dritten Leistungshalbleiterschalter T1 und T3 konträr eingeschaltet und ausgeschaltet werden, wobei der erste und dritte Leistungshalbleiterschalter T1 und T3 zu Ausschalthauptzeitpunkten t0 ausgeschaltet werden, und
- der erste und dritte Leistungshalbleiterschalter T1 und T3 mit einer ersten Frequenz ein- und ausgeschalten werden, und
   der fünfte und sechste Leistungshalbleiterschalter T5 und T6 zueinander konträr eingeschaltet und ausgeschaltet werden, und
- in einem jeweiligen Zeitraum, in dem der erste und dritte Leistungshalbleiterschalter T1 und T3 oder der zweite und vierte Leistungshalbleiterschalter T2 und T4 gleichzeitig eingeschaltet sind, der fünfte und sechste Leistungshalbleiterschalter T5 und T6 mehrfach eingeschaltet und ausgeschaltet werden.

Die Schaltsignale von der techniküblichen Steuereinrichtung werden anhand eines eine zweite Frequenz aufweisenden sinusförmigen Sollsignals S und eines eine dritte Frequenz aufweisenden Modulationssignals M erzeugt (siehe FIG 2 obere Signale). Das Sollsignal S und das Modulationssignal M werden dabei von der techniküblichen Steuereinrichtung intern erzeugt, wobei falls der Wechselpotentialanschluss AC mit einem Wechselstromnetz verbunden ist, das Sollsignal S vorzugsweise anhand des zeitlichen Verlaufs der Netzspannung des Wechselstromnetzes generiert wird. Die erste Frequenz stimmt mit der zweiten Frequenz überein.

Die technikübliche Steuereinrichtung ist dazu ausgebildet, anhand des Sollsignals S den ersten, zweiten, dritten und vierten Leistungshalbleiterschalter T1, T2, T3 und T4 ein- und auszuschalten und anhand des Sollsignals S und des Modulationssignals M den fünften und sechsten Leistungshalbleiterschalter T5 und T6 pulsweitenmoduliert ein- und auszuschalten. Die technikübliche Steuereinrichtung ist weiterhin dazu ausgebildet, dass der erste und dritte Leistungshalbleiterschalter T1 und T3 eingeschaltet sind, wenn das Sollsignal S einen positiven Wert aufweist und ausgeschaltet sind, wenn das Sollsignal S einen negativen Wert aufweist, wobei, wenn das Modulationssignal M einen höheren Wert aufweist als das Sollsignal S, der fünfte Leistungshalbleiterschalter T5 ausgeschaltet ist und, wenn das Modulationssignal M einen niedrigeren Wert aufweist als das Sollsignal S, der fünfte Leistungshalbleiterschalter T5 eingeschaltet ist.

Die dritte Frequenz ist dabei techniküblich ein ganzzahliges Vielfaches der zweiten Frequenz und das Modulationssignal M ist gegenüber dem Sollsignal S techniküblich nicht phasenverschoben. Nachteilig dabei ist, dass in dem Ausschalthauptzeitpunkt t0, zu dem der erste und dritte Leistungshalbleiterschalter T1 und T3 ausgeschaltet werden und somit der zweite und vierte Leistungshalbleiterschalter T2 und T4 eingeschaltet werden, auch gleichzeitig der fünfte und sechste Leistungshalbleiterschalter T5 und T6 konträr umgeschaltet werden. Bei einer realen technischen Realisierung der Ansteuerung des fünften und sechsten Leistungshalbleiterschalters T5 und T6 schalten diese, z.B. infolge unterschiedlicher Schaltzeiten und unterschiedlicher Längen der von der techniküblichen Steuereinrichtung zu den Leistungshalbleiterschaltern T1,T2,T3,T4,T5 und T6 verlaufenden Ansteuerleitungen, unkontrolliert entweder kurz vor dem jeweiligen Ausschalthauptzeitpunkt t0 oder kurz nach diesem, was technisch unerwünscht ist. Da z.B. die Schaltgeschwindigkeiten der Leistungshalbleiterschalter temperaturabhängig sind, ergibt sich im zeitlichen Nahbereich um den Ausschalthauptzeitpunkt t0 herum kein definiertes Schaltverhalten des Stromrichters.

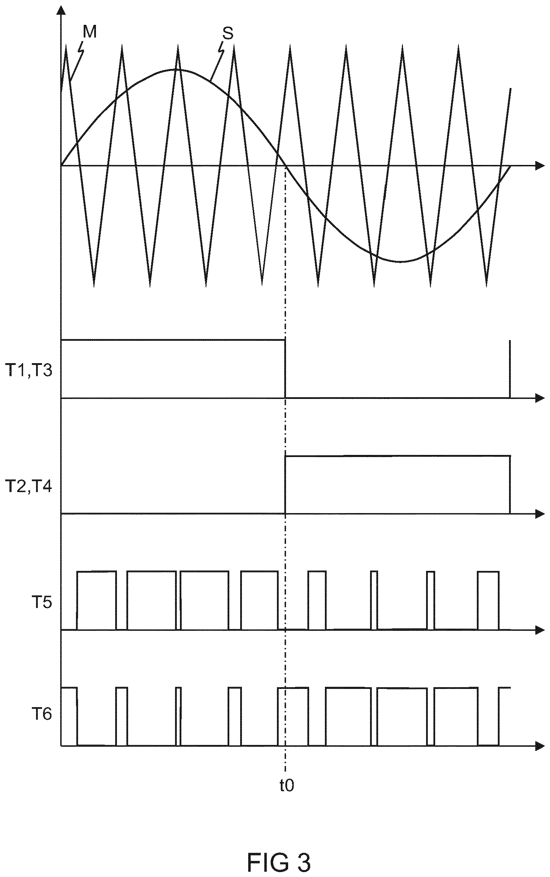

Die erfindungsgemäße Steuereinrichtung 3 ist, wie beispielhaft in FIG 3 bis FIG 6 dargestellt, dazu ausgebildet, die Leistungshalbleiterschalter T1,T2,T3,T4,T5, und T6 derart anzusteuern, dass der fünfte Leistungshalbleiterschalter T5 vor dem jeweiligen Ausschalthauptzeitpunkt t0 ausgeschaltet wird und erst nach dem jeweiligen Ausschalthauptzeitpunkt t0 wieder eingeschaltet wird oder der fünfte Leistungshalbleiterschalter T5 vor dem jeweiligen Ausschalthauptzeitpunkt t0 eingeschaltet wird und erst nach dem jeweiligen Ausschalthauptzeitpunkt t0 wieder ausgeschaltet wird.

Die erfindungsgemäße Steuereinrichtung 3 stimmt mit der oben beschriebenen techniküblichen Steuereinrichtung, einschließlich vorteilhafter Ausbildungen, mit Ausnahme der Ausbildung des Modulationssignals M, überein.

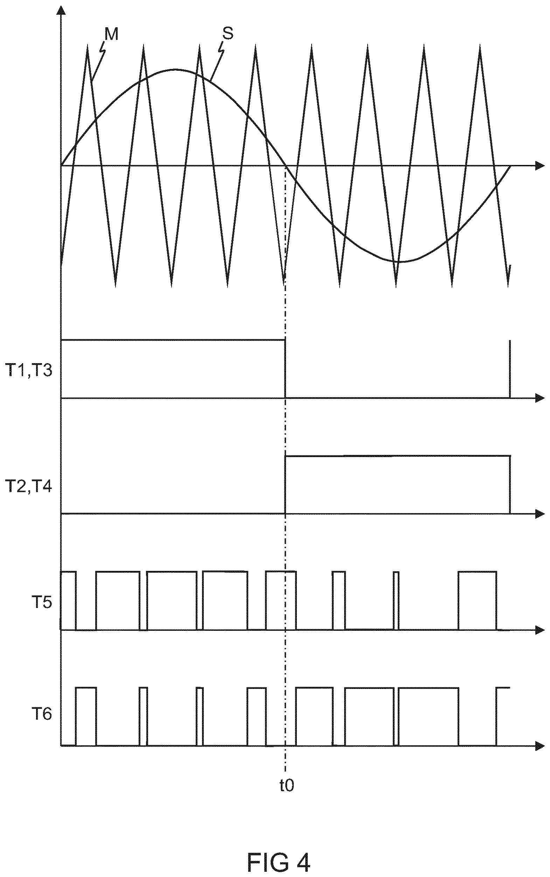

Im Rahmen einer Ausbildung der erfindungsgemäßen Steuereinrichtung 3 ist, wie beispielhaft in FIG 3 und FIG 4 dargestellt, die dritte Frequenz eine ganzzahliges Vielfaches der zweiten Frequenz, wobei im Unterschied zur techniküblichen Steuereinrichtung das Modulationssignal M gegenüber dem Sollsignal S phasenverschoben ist. Die zweite Frequenz stimmt mit der ersten Frequenz überein. In FIG 3 ist das Modulationssignal M gegenüber dem Sollsignal S in negative Richtung phasenverschoben, was bewirkt, dass der fünfte Leistungshalbleiterschalter T5 vor dem jeweiligen Ausschalthauptzeitpunkt t0 ausgeschaltet wird und erst nach dem jeweiligen Ausschalthauptzeitpunkt t0 wieder eingeschaltet wird. In FIG 4 ist das Modulationssignal M gegenüber dem Sollsignal S in positive Richtung phasenverschoben, was bewirkt, dass der fünfte Leistungshalbleiterschalter T5 vor dem jeweiligen Ausschalthauptzeitpunkt t0 eingeschaltet wird und erst nach dem jeweiligen Ausschalthauptzeitpunkt t0 wieder ausgeschaltet wird.

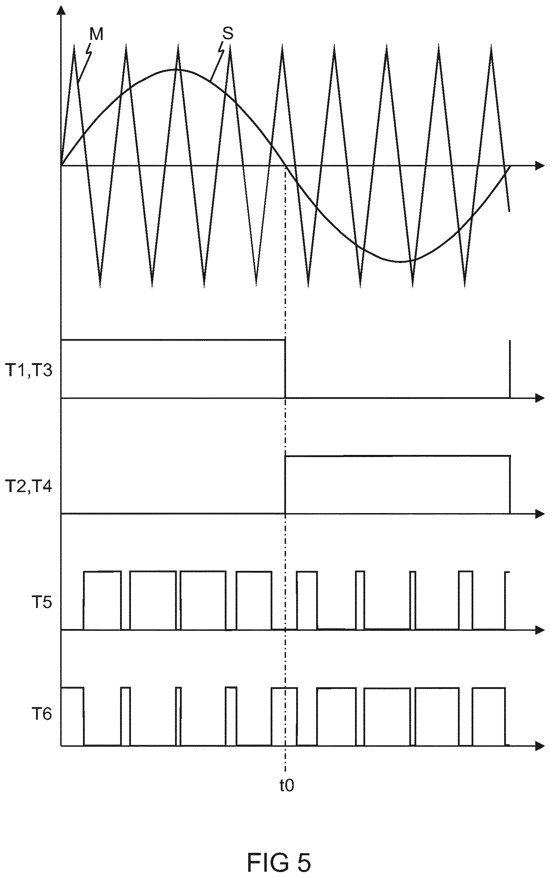

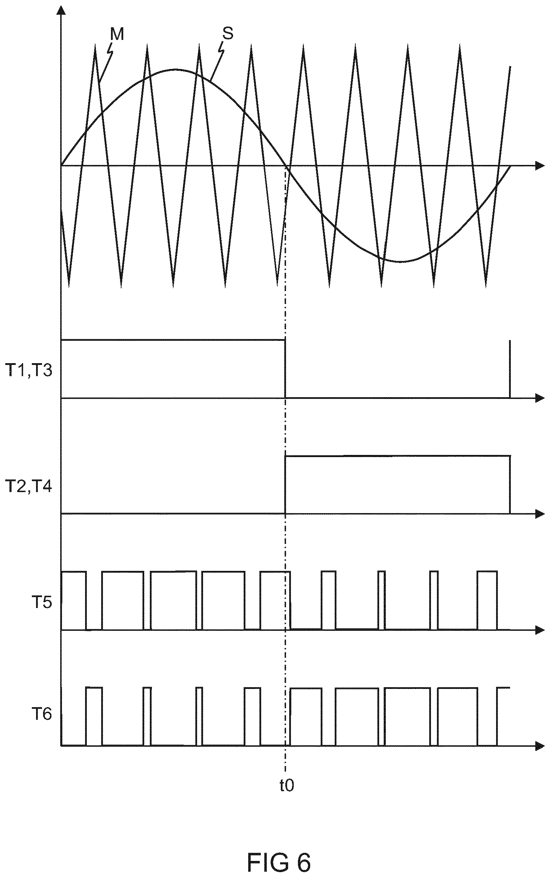

Im Rahmen einer weiteren Ausbildung der erfindungsgemäßen Steuereinrichtung 3 ist, wie beispielhaft in FIG 5 und FIG 6 dargestellt, die dritte Frequenz höher als die zweite Frequenz, wobei die dritte Frequenz kein ganzzahliges Vielfaches der zweiten Frequenz ist. Die zweite Frequenz stimmt mit der ersten Frequenz überein. In FIG 5 und FIG 6 ist die dritte Frequenz kein ganzzahliges Vielfaches der zweiten Frequenz, was bewirkt, dass der fünfte Leistungshalbleiterschalter T5 vor dem jeweiligen Ausschalthauptzeitpunkt t0 ausgeschaltet wird und erst nach dem jeweiligen Ausschalthauptzeitpunkt t0 wieder eingeschaltet wird (FIG 5) oder dass der fünfte Leistungshalbleiterschalter T5 vor dem jeweiligen Ausschalthauptzeitpunkt t0 eingeschaltet wird und erst nach dem jeweiligen Ausschalthauptzeitpunkt t0 wieder ausgeschaltet wird (FIG 6).

## Patentansprüche

1. Stromrichtereinrichtung mit einem Stromrichter (2), der einen ersten, zweiten, dritten, vierten, fünften und sechsten Leistungshalbleiterschalter (T1,T2,T3,T4,T5, T6), die jeweilig einen ersten und einen zweiten Laststromanschluss (L1,L2) aufweisen, aufweist und mit einer Steuereinrichtung (3), die zur Ansteuerung dieser Leistungshalbleiterschalter (T1,T2,T3,T4,T5, T6) ausgebildet ist, wobei der zweite Laststromanschluss (L2) des ersten Leistungshalbleiterschalters (T1) mit dem ersten Laststromanschluss (L1) des zweiten Leistungshalbleiterschalters (T2) und mit dem ersten Laststromanschluss (L1) des fünften Leistungshalbleiterschalters (T5) elektrisch leitend verbunden ist, wobei der zweite Laststromanschluss (L2) des zweiten Leistungshalbleiterschalters (T2) mit dem ersten Laststromanschluss (L1) des dritten Leistungshalbleiterschalters (T3) elektrisch leitend verbunden ist, wobei der zweite Laststromanschluss (L2) des dritten Leistungshalbleiterschalters (T3) mit dem ersten Laststromanschluss (L1) des vierten Leistungshalbleiterschalters (T4) und mit dem ersten Laststromanschluss (L1) des sechsten Leistungshalbleiterschalters (T6) elektrisch leitend verbunden ist, wobei der zweite Laststromanschluss (L2) des fünften Leistungshalbleiterschalters (T5) mit dem zweiten Laststromanschluss (L2) des sechsten Leistungshalbleiterschalters (T6) elektrisch leitend verbunden ist, wobei die Steuereinrichtung (3) dazu ausgebildet ist, die Leistungshalbleiterschalter (T1,T2,T3,T4,T5, T6) derart anzusteuern, dass
- der erste und dritte Leistungshalbleiterschalter (T1,T3) gleichzeitig eingeschaltet und gleichzeitig ausgeschaltet werden, und
- der zweite und vierte Leistungshalbleiterschalter (T2,T4) gleichzeitig eingeschaltet und gleichzeitig ausgeschaltet werden, wobei der zweite und vierte Leistungshalbleiterschalter (T2,T4) zu dem ersten und dritten Leistungshalbleiterschalter (T1,T3) konträr eingeschaltet und ausgeschaltet werden, wobei der erste und dritte Leistungshalbleiterschalter (T1,T3) zu Ausschalthauptzeitpunkten (t0) ausgeschaltet werden, und
- der erste und dritte Leistungshalbleiterschalter (T1,T3) mit einer ersten Frequenz ein- und ausgeschalten werden, und
der fünfte und sechste Leistungshalbleiterschalter (T5,T6) zueinander konträr eingeschaltet und ausgeschaltet werden, und
- in einem jeweiligen Zeitraum, in dem der erste und dritte Leistungshalbleiterschalter (T1,T3) oder der zweite und vierte Leistungshalbleiterschalter (T2,T4) gleichzeitig eingeschaltet sind, der fünfte und sechste Leistungshalbleiterschalter (T5,T6) mehrfach eingeschaltet und ausgeschaltet werden,
wobei die Steuereinrichtung (3) dazu ausgebildet ist, die Leistungshalbleiterschalter (T1,T2,T3,T4,T5, T6) derart anzusteuern, dass der fünfte Leistungshalbleiterschalter (T5) vor dem jeweiligen Ausschalthauptzeitpunkt (t0) ausgeschaltet wird und erst nach dem jeweiligen Ausschalthauptzeitpunkt (t0) wieder eingeschaltet wird oder der fünfte Leistungshalbleiterschalter (T5) vor dem jeweiligen Ausschalthauptzeitpunkt (t0) eingeschaltet wird und erst nach dem jeweiligen Ausschalthauptzeitpunkt (t0) wieder ausgeschaltet wird,
wobei die Steuereinrichtung (3) dazu ausgebildet ist, anhand eines eine zweite Frequenz aufweisenden sinusförmigen Sollsignals (S) den ersten, zweiten, dritten und vierten Leistungshalbleiterschalter (T1,T2,T3,T4) ein- und auszuschalten und anhand des sinusförmigen Sollsignals (S) und eines eine dritte Frequenz aufweisenden Modulationssignals (M) den fünften und sechsten Leistungshalbleiterschalter (T5,T6) pulsweitenmoduliert ein- und auszuschalten, wobei die zweite Frequenz mit der ersten Frequenz übereinstimmt,
wobei die Steuereinrichtung (3) dazu ausgebildet ist, dass der erste und dritte Leistungshalbleiterschalter (T1,T3) eingeschaltet sind, wenn das Sollsignal (S) einen positiven Wert aufweist, und ausgeschaltet sind, wenn das Sollsignal (S) einen negativen Wert aufweist, wobei, wenn das Modulationssignal (M) einen höheren Wert aufweist als das Sollsignal (S), der fünfte Leistungshalbleiterschalter (T5) ausgeschaltet ist und, wenn das Modulationssignal (M) einen niedrigeren Wert aufweist als das Sollsignal (S), der fünfte Leistungshalbleiterschalter (T5) eingeschaltet ist, wobei die dritte Frequenz ein ganzzahliges Vielfaches der zweiten Frequenz ist, wobei das Modulationssignal (M) gegenüber dem Sollsignal (S) phasenverschoben ist, oder
die dritte Frequenz höher ist als die zweite Frequenz, wobei die dritte Frequenz kein ganzzahliges Vielfaches der zweiten Frequenz ist.

2. Stromrichtereinrichtung nach einem der vorherigen Ansprüche, wobei das Halbleitermaterial aus, denen der erste, zweite, dritte und vierte Leistungshalbleiterschalter (T1,T2,T3,T4) ausgebildet sind, aus Silizium ausgebildet ist und das Halbleitermaterial, aus denen der fünfte und sechste Leistungshalbleiterschalter (T5,T6) ausgebildet sind, aus Siliziumkarbid oder Galliumnitrid ausgebildet ist.

3. Stromrichtereinrichtung nach einem der vorherigen Ansprüche, wobei der fünfte und sechste Leistungshalbleiterschalter (T5,T6) als MOSFETS ausgebildet sind.

4. Stromrichtereinrichtung nach einem der vorherigen Ansprüche, wobei der Stromrichter (2) einen Kondensator (C1) aufweist, wobei ein erster Anschluss des Kondensators (C1) mit dem ersten Laststromanschluss (L1) des fünften Leistungshalbleiterschalters (T5) und ein zweiter Anschluss des Kondensators (C1) mit dem ersten Laststromanschluss (L1) des sechsten Leistungshalbleiterschalters (T6) elektrisch leitend verbunden ist.

## Claims

1. Converter device comprising a converter (2), which has a first, second, third, fourth, fifth and sixth power semiconductor switch (T1, T2, T3, T4, T5, T6) each having a first and a second load current connection (L1, L2), and comprising a control device (3) designed to actuate said power semiconductor switches (T1, T2, T3, T4, T5, T6), wherein the second load current connection (L2) of the first power semiconductor switch (T1) is electrically conductively connected to the first load current connection (L1) of the second power semiconductor switch (T2) and to the first load current connection (L1) of the fifth power semiconductor switch (T5), wherein the second load current connection (L2) of the second power semiconductor switch (T2) is electrically conductively connected to the first load current connection (L1) of the third power semiconductor switch (T3), wherein the second load current connection (L2) of the third power semiconductor switch (T3) is electrically conductively connected to the first load current connection (L1) of the fourth power semiconductor switch (T4) and to the first load current connection (L1) of the sixth power semiconductor switch (T6), wherein the second load current connection (L2) of the fifth power semiconductor switch (T5) is electrically conductively connected to the second load current connection (L2) of the sixth power semiconductor switch (T6), wherein the control device (3) is designed to actuate the power semiconductor switches (T1, T2, T3, T4, T5, T6) in such a way that
- the first and third power semiconductor switch (T1, T3) are switched on simultaneously and switched off simultaneously, and
- the second and fourth power semiconductor switch (T2, T4) are switched on simultaneously and switched off simultaneously, wherein the second and fourth power semiconductor switch (T2, T4) are switched on and switched off contrary to the first and third power semiconductor switch (T1, T3), wherein the first and third power semiconductor switch (T1, T3) are switched off at main switch-off times (t0), and
- the first and third power semiconductor switch (T1, T3) are switched on and off at a first frequency, and
the fifth and sixth power semiconductor switch (T5, T6) are switched on and switched off contrary to one another, and
- the fifth and sixth power semiconductor switch (T5, T6) are switched on and switched off multiple times in a respective period in which the first and third power semiconductor switch (T1, T3) or the second and fourth power semiconductor switch (T2, T4) are switched on simultaneously,
wherein the control device (3) is designed to actuate the power semiconductor switches (T1, T2, T3, T4, T5, T6) in such a way that the fifth power semiconductor switch (T5) is switched off before the respective main switch-off time (t0) and is switched on again only after the respective main switch-off time (t0) or the fifth power semiconductor switch (T5) is switched on before the respective main switch-off time (t0) and is switched off again only after the respective main switch-off time (t0),
wherein the control device (3) is designed to switch the first, second, third and fourth power semiconductor switch (T1, T2, T3, T4) on and off based on a sinusoidal target signal (S) having a second frequency and to switch the fifth and sixth power semiconductor switch (T5, T6) on and off in a pulse-width-modulated manner based on the sinusoidal target signal (S) and a modulation signal (M) having a third frequency, wherein the second frequency matches the first frequency,
wherein the control device (3) is designed so that the first and third power semiconductor switch (T1, T3) are switched on if the target signal (S) has a positive value and are switched off if the target signal (S) has a negative value, wherein the fifth power semiconductor switch (T5) is switched off if the modulation signal (M) has a higher value than the target signal (S) and the fifth power semiconductor switch (T5) is switched on if the modulation signal (M) has a lower value than the target signal (S), wherein the third frequency is an integer multiple of the second frequency, wherein the modulation signal (M) is phase-shifted with respect to the target signal (S),
or
the third frequency is higher than the second frequency, wherein the third frequency is not an integer multiple of the second frequency.

2. Converter device according to one of the preceding claims, wherein the semiconductor material from which the first, second, third and fourth power semiconductor switch (T1, T2, T3, T4) are formed is formed from silicon and the semiconductor material from which the fifth and sixth power semiconductor switch (T5, T6) are formed is formed from silicon carbide or gallium nitride.

3. Converter device according to either of the preceding claims, wherein the fifth and sixth power semiconductor switch (T5, T6) are in the form of MOSFETs.

4. Converter device according to any one of the preceding claims, wherein the converter (2) has a capacitor (C1), wherein a first connection of the capacitor (C1) is electrically conductively connected to the first load current connection (L1) of the fifth power semiconductor switch (T5) and a second connection of the capacitor (C1) is electrically conductively connected to the first load current connection (L1) of the sixth power semiconductor switch (T6).

## Revendications

1. Dispositif convertisseur statique, comprenant un convertisseur statique (2) qui présente un premier, deuxième, troisième, quatrième, cinquième et sixième commutateur à semi-conducteur de puissance (T1, T2, T3, T4, T5, T6) qui présentent respectivement une première et une deuxième borne de courant sous charge (L1, L2), et comprenant un dispositif de commande (3) qui est réalisé pour piloter ces commutateurs à semi-conducteur de puissance (T1, T2, T3, T4, T5, T6), dans lequel la deuxième borne de courant sous charge (L2) du premier commutateur à semi-conducteur de puissance (T1) est reliée de manière électriquement conductrice à la première borne de courant sous charge (L1) du deuxième commutateur à semi-conducteur de puissance (T2) et à la première borne de courant sous charge (L1) du cinquième commutateur à semi-conducteur de puissance (T5), dans lequel la deuxième borne de courant sous charge (L2) du deuxième commutateur à semi-conducteur de puissance (T2) est reliée de manière électriquement conductrice à la première borne de courant sous charge (L1) du troisième commutateur à semi-conducteur de puissance (T3), dans lequel la deuxième borne de courant sous charge (L2) du troisième commutateur à semi-conducteur de puissance (T3) est reliée de manière électriquement conductrice à la première borne de courant sous charge (L1) du quatrième commutateur à semi-conducteur de puissance (T4) et à la première borne de courant sous charge (L1) du sixième commutateur à semi-conducteur de puissance (T6), dans lequel la deuxième borne de courant sous charge (L2) du cinquième commutateur du semi-conducteur de puissance (T5) est reliée de manière électriquement conductrice à la deuxième borne de courant sous charge (L2) du sixième commutateur à semi-conducteur de puissance (T6), dans lequel le dispositif de commande (3) est réalisé pour piloter les commutateurs à semi-conducteur de puissance (T1, T2, T3, T4, T5, T6) de telle sorte que
- le premier et le troisième commutateur à semi-conducteur de puissance (T1, T3) sont mis sous tension simultanément et sont mis hors tension simultanément, et
- le deuxième et le quatrième commutateur à semi-conducteur de puissance (T2, T4) sont mis sous tension simultanément et sont mis hors tension simultanément, dans lequel le deuxième et le quatrième commutateur à semi-conducteur de puissance (T2, T4) sont mis sous et hors tension de manière contraire au premier et au troisième commutateur à semi-conducteur de puissance (T1, T3), dans lequel le premier et le troisième commutateur à semi-conducteur de puissance (T1, T3) sont mis hors tension à des instants principaux de mise hors tension (t0), et
- le premier et le troisième commutateur à semi-conducteur de puissance (T1, T3) sont mis sous et hors tension à une première fréquence, et
le cinquième et le sixième commutateur à semi-conducteur de puissance (T5, T6) sont mis sous et hors tension de manière mutuellement contraire, et
- dans une période de temps respective dans laquelle le premier et le troisième commutateur à semi-conducteur de puissance (T1, T3) ou le deuxième et le quatrième commutateur à semi-conducteur de puissance (T2, T4) sont mis sous tension simultanément, le cinquième et le sixième commutateur à semi-conducteur de puissance (T5, T6) sont mis sous et hors tension à plusieurs reprises,
dans lequel le dispositif de commande (3) est réalisé pour piloter les commutateurs à semi-conducteur de puissance (T1, T2, T3, T4, T5, T6) de telle sorte que le cinquième commutateur à semi-conducteur de puissance (T5) est mis hors tension avant l'instant principal de mise hors tension (t0) respectif et n'est remis sous tension qu'après l'instant principal de mise hors tension (t0) respectif, ou le cinquième commutateur à semi-conducteur de puissance (T5) est mis sous tension avant l'instant principal de mise hors tension (t0) respectif et n'est remis hors tension qu'après l'instant principal de mise hors tension (t0) respectif,
dans lequel le dispositif de commande (3) est réalisé pour mettre sous et hors tension le premier, deuxième, troisième et quatrième commutateur à semi-conducteur de puissance (T1, T2, T3, T4) à l'aide d'un signal de consigne sinusoïdal (S) présentant une deuxième fréquence, et pour mettre sous et hors tension de manière modulée en largeur d'impulsion le cinquième et le sixième commutateur à semi-conducteur de puissance (T5, T6) à l'aide du signal de consigne sinusoïdal (S) et d'un signal de modulation (M) présentant une troisième fréquence, la deuxième fréquence coïncidant avec la première fréquence,
dans lequel le dispositif de commande (3) est réalisé pour que le premier et le troisième commutateur à semi-conducteur de puissance (T1, T3) soient mis sous tension lorsque le signal de consigne (S) présente une valeur positive et soient mis hors tension lorsque le signal de consigne (S) présente une valeur négative, dans lequel, lorsque le signal de modulation (M) présente une valeur supérieure au signal de consigne (S), le cinquième commutateur à semi-conducteur de puissance (T5) est mis hors tension, et lorsque le signal de modulation (M) présente une valeur inférieure au signal de consigne (S), le cinquième commutateur à semi-conducteur de puissance (T5) est mis sous tension, dans lequel la troisième fréquence est un multiple entier de la deuxième fréquence, le signal de modulation (M) étant déphasé par rapport au signal de consigne (S), ou
la troisième fréquence est supérieure à la deuxième fréquence, la troisième fréquence n'étant pas un multiple entier de la deuxième fréquence.

2. Dispositif convertisseur statique selon l'une quelconque des revendications précédentes, dans lequel le matériau semi-conducteur dont sont réalisés le premier, deuxième, troisième et quatrième commutateur à semi-conducteur de puissance (T1, T2, T3, T4) est réalisé en silicium, et le matériau semi-conducteur dont sont réalisés le cinquième et le sixième commutateur à semi-conducteur de puissance (T5, T6) est réalisé en carbure de silicium ou nitrure de gallium.

3. Dispositif convertisseur statique selon l'une quelconque des revendications précédentes, dans lequel le cinquième et le sixième commutateur à semi-conducteur de puissance (T5, T6) sont réalisés sous forme de MOSFET.

4. Dispositif convertisseur statique selon l'une quelconque des revendications précédentes, dans lequel le convertisseur statique (2) présente un condensateur (C1), dans lequel une première borne du condensateur (C1) est reliée de manière électriquement conductrice à la première borne de courant sous charge (L1) du cinquième commutateur à semi-conducteur de puissance (T5) et une deuxième borne du condensateur (C1) est reliée de manière électriquement conductrice à la première borne de courant sous charge (L1) du sixième commutateur à semi-conducteur de puissance (T6).
